(19) Europäisches Patentamt
European Patent Office
Office européen des brevets

(11) **EP 4 675 122 A1**

(12) **EUROPÄISCHE PATENTANMELDUNG**

(43) Veröffentlichungstag:
**07.01.2026 Patentblatt 2026/02**

(51) Internationale Patentklassifikation (IPC):
**F16D 63/00** (2006.01)

(21) Anmeldenummer: **25176063.3**

(52) Gemeinsame Patentklassifikation (CPC):
**F16D 63/006**

(22) Anmeldetag: **13.05.2025**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **05.07.2024 DE 102024119194**

(71) Anmelder: **KB Intellectual Property GmbH & Co. KG**
**82049 Pullach (DE)**

(72) Erfinder:
• **HECHT, Ferdinand**
**85258 Weichs (DE)**
• **MATHIEU, Michael**
**86938 Schondorf am Ammersee (DE)**
• **ELSTORPFF, Marc-Gregory**
**80368 München (DE)**
• **STEGMANN, André**
**82223 Eichenau (DE)**

(54) **VERRIEGELUNGSVORRICHTUNG ZUM MANUELLEN LÖSEN EINER FESTSTELLBREMSE**

(57) Eine Verriegelungsvorrichtung (10, 10', 10", 40, 50) zum manuellen Lösen einer Feststellbremse, insbesondere in einem Bremsaktuator (1) für Schienenfahrzeuge, wobei die Verriegelungsvorrichtung (10, 10', 10", 40, 50) einen Spindeltrieb (35, 41, 51) mit einer Verzahnung (5, 45, 55) und zumindest ein die Drehbewegung und damit die Axialkraftübertragung einer Feststellbremse schaltendes Sperrelement umfasst, welches in Eingriff mit der Verzahnung (5, 45, 55) steht, dadurch gekennzeichnet, dass die Verriegelungsvorrichtung (10, 10', 10", 40, 50) zumindest ein Anschlags-Dämpfungselement (19, 19', 19", 19''', 30, 119, 44, 54) aufweist, welches den Anschlag des Sperrelements dämpft oder diesen verhindert.

Fig. 1

**Beschreibung**

Die Erfindung betrifft eine Verriegelungsvorrichtung zum manuellen Lösen einer Feststellbremse nach dem Oberbegriff des Anspruchs 1 und einen Bremsaktuator mit dieser Verriegelungsvorrichtung.

Eine gattungsgemäße Verriegelungsvorrichtung in einer Feststellbremse ist in der DE 10 2018 122 519 A1 offenbart. Dabei handelt es sich um einen Bremszylinder mit mechanischer Bremskraftverriegelung. Die hier beschriebene Feststellbremse dient der Sicherung des Fahrzeugs gegen unbeabsichtigtes Wegrollen, einer dauerhaften Sicherstellung der erforderlichen Feststellkraft, ermöglicht eine zugweite Aktivierung und Deaktivierung von verschiedenen Führerständen des Fahrzeugs und eine manuelle Deaktivierung durch Notlösen der Parkbremse bei Verlust der regulären Betätigungsenergie.

Eine weitere Ausgestaltung der Feststellbremse stellt die sogenannte Federspeicherfeststellbremse dar, wie sie z.B. in der DE 10 2007 063 699 B4 beschrieben wird. Dabei handelt es sich um eine passive Bremse. Das bedeutet im Feststellbremsfall wird die Parkbremskraft durch eine Feder erzeugt. Zum Lösen der Feststellbremse wird der sog. Federspeicherkolben mit Druck beaufschlagt und die Feder vorgespannt. Für den Fall, dass kein Druck zur Verfügung steht, kann die Feststellbremse manuell gelöst werden, wobei wiederum der Kraftfluss mit Hilfe von Sperrelementen getrennt werden muss.

Dabei wirkt entweder die gesamte Feststellbremskraft oder, durch eine Übersetzung reduziert, nur ein Teil der Feststellbremskraft auf die Sperrelemente in Form von z.B. Sperrklinken. Zu Beginn des Lösevorganges muss die aus der Feststellbremskraft resultierende Reibkraft überwunden werden.

Zum einen reduziert sich die Reibkraft während des Lösevorganges, bei Übergang von Haftreibung zur Gleitreibung, zum anderen wird durch den schlagartigen Abbau der Feststellbremskraft und der Zuspannenergie ein Teil der Zuspannenergie auf die Sperrelemente übertragen. Dies führt zu einer erheblichen Beschleunigung der Sperrelemente, wobei diese anschließend mit hoher Energie auf die Anschlagflächen aufschlagen. Dadurch werden die Sperrelemente sowie die Anschlagflächen stark beansprucht und es kommt zu einer erheblichen Geräuschentwicklung.

Die EP 2 826 684 B1 offenbart ebenfalls eine Verriegelungsvorrichtung mit einem Zahnrad, welches durch eine Sperrklinke entriegelbar ist, wobei auch hier aus den gleichen Gründen bei der Entriegelung hohe Kräfte durch die Klinke auf die Anschlagflächen wirken und es zu einer Geräuschentwicklung kommt.

Die Aufgabe der vorliegenden Erfindung ist das Bereitstellen einer Verriegelungsvorrichtung unter Verringerung der vorgenannten Probleme der Geräuschentwicklung und der hohen auf die Anschlagflächen einwirkenden Kräfte.

Die Aufgabe wird durch eine Verriegelungsvorrichtung mit den Merkmalen des Anspruchs 1 gelöst.

Die erfindungsgemäße Verriegelungsvorrichtung dient dem manuellen Lösen einer Feststellbremse, welche insbesondere in einem Bremsaktuatoren eines Schienenfahrzeugs angeordnet ist. Die Verriegelungsvorrichtung kann einen Spindeltrieb mit einer Verzahnung und zumindest ein die Drehbewegung und damit die Axialkraftübertragung der Feststellbremse schaltendes Sperrelement umfassen. Dieses ist vorzugsweise als verschwenkbare Sperrklinke ausgebildet.

Die Sperrklinke steht in Eingriff mit der Verzahnung. Diese kann vorteilhaft einen oder mehrere asymmetrische Zähne und/oder Zahnkerben aufweisen. Die erfindungsgemäße Verriegelungsvorrichtung weist zumindest ein Anschlags-Dämpfungselement auf, welches den Anschlag des Sperrelements, insbesondere gegen ein Gehäuse des Bremsaktuators, dämpft oder diesen verhindert.

Das Anschlags-Dämpfungselement verhindert das Auftreten von Geräuschen und verringert die Gefahr einer mechanischen Schädigung der Sperrklinke und der gehäuseseitigen Anschlagsflächen.

Vorteilhafte Ausgestaltungen der Erfindung sind Gegenstand der Unteransprüche.

In einer vorteilhaft-einfachen und mit wenigen Schritten montierbaren Variante kann das Anschlags-Dämpfungselement als elastisches Dämpfungselement ausgebildet sein.

Das Anschlags-Dämpfungselement kann alternativ und vorteilhaft durch seine kompakte Bauart als Fluiddämpfer mit einem gasförmigen und/oder flüssigen Dämpfungsmedium ausgebildet sein.

In einer weiteren Alternative kann das Anschlags-Dämpfungselement eine Reibfläche an der Kontaktstelle zur Sperrklinke aufweisen. Hier wird eine freigesetzte kinetische Energie teilweise in Wärme umgewandelt.

Die vorgenannten Alternativen können auch kombiniert in einem Anschlags-Dämpfungselement oder gemeinsam als mehrere Dämpfungselemente zur Dämpfung einer einzigen oder von mehreren Sperrklinken eingesetzt werden.

In einigen Varianten kann die Verriegelungsvorrichtung, vorzugsweise das Anschlags-Dämpfungselement, einen federgelagerten Federstift umfassen, welcher unter Einwirkung einer Rückstellkraft der Feder des Federstifts die Sperrklinke in den Eingriff mit der Verzahnung des Spindeltriebs drückt. Diese Variante der Einkopplung kann mit vergleichsweise geringem Platzbedarf realisiert werden, so dass besonders viel Raum zur Anordnung eines oder mehrere Anschlags-Dämpfungselemente vorgehalten wird.

Die Sperrklinke kann durch eine einer Steuervorrichtung zugeordneten, linear-verschiebbaren Riegelstange betätigbar sein. Diese Möglichkeit der Entriegelung ohne größeren Kraftaufwand ermöglicht eine Entkopplung der Sperrklinke bei der die Entkopplung allmählich und nicht ruckartig erfolgt.

In diesem Kontext ist es besonders von Vorteil, wenn die Sperrklinke eine Kontaktrolle aufweist, welche derart zur Riegelstange angeordnet ist, dass sie zur Betätigung der Sperrklinke entlang einer geneigten Kontaktfläche der Riegelstange rollbar ist. Durch das Abrollen muss keine hohe Anfangskraft zur Überwindung eines Reibungswiderstands aufgebracht werden.

Das Anschlags-Dämpfungselement kann vorteilhaft in einer Aufnahme der Sperrklinke fixiert sein. Bei dieser Variante ist eine Vorabmontage des Anschlags-Dämpfungselements an der Sperrklinke vor deren Montage im Gehäuse möglich, wodurch sich die Montage weniger aufwändig gestaltet.

In einer vorteilhaften montagefreundlichen Ausgestaltung der Erfindung kann das Anschlags-Dämpfungselement einen Pilzkopf mit einer Anschlagfläche und einen Schaft zur Festlegung in der Aufnahme der Sperrklinke und/oder in einer Aufnahme des Gehäuses aufweisen.

Vorteilhaft kann das Anschlags-Dämpfungselement zumindest bereichsweise, insbesondere im Bereich des Pilzkopfes aus einem Elastomer und/oder einem TPE gebildet sein.

Besonders bevorzugt ist das Anschlags-Dämpfungselement mehrteilig aufgebaut, wobei das Anschlags-Dämpfungselement zumindest bereichsweise, insbesondere im Bereich des Schafts aus einem Material besteht, welches ein größeres E-Modul aufweist als ein Material im Bereich des Pilzkopfes. Das Material mit dem kleineren E-Modul ist flexibler und kann infolgedessen leichter verformt werden.

Die Verriegelungsvorrichtung kann überdies ein Bauteil aufweisen, welches in kompakter Art und Weise sowohl den Federstift umfasst und welcher zudem als das Anschlags-Dämpfungselement ausgebildet ist.

Insbesondere kann bei einem solchen Bauteil benachbart zum Federstift ein Druckraum angeordnet sein, in welchem das Dämpfungsmedium angeordnet ist.

Es ist überdies von Vorteil, wenn der Federstift endständig einen Bolzenkopf mit einem spitz-zulaufenden Ende mit der Reibfläche aufweist.

Die Sperrklinke ist in an sich üblicher Weise in einen ersten Hebelarm und einen zweiten Hebelarm unterteilt, wobei auf den ersten Hebelarm die Steuervorrichtung einwirkt. Der zweite Hebelarm ist mit einer Verzahnung umfassend zumindest einen Zahn zum Eingriff in die korrespondierende Verzahnung des Spindeltriebs, insbesondere einer Gewindemutter des Spindeltriebs, versehen. Zumindest der erste Hebelarm ist vorteilhaft biegeweich ausgebildet, um ein optimiertes Entkoppeln der Verzahnung zu ermöglichen. Biegeweich bedeutet in diesem Kontext eine Nachgiebigkeit im Bereich zwischen $1 \times 10^{-5}$ und $1 \times 10^{-2}$ 1/N unter Standardbedingungen, wie z.B. 25°C.

Weiterhin erfindungsgemäß ist ein Bremsaktuator, insbesondere für ein Schienenfahrzeug, umfassend eine Feststellbremse und eine erfindungsgemäße Verriegelungsvorrichtung zum Lösen dieser Feststellbremse.

Die erfindungsgemäße Verriegelungsvorrichtung kann in einer Vielzahl verschiedener Bremsen eingesetzt werden. Besonders vorteilhaft kann die erfindungsgemäße Verriegelungsvorrichtung in Schienenfahrzeugen eingesetzt werden.

In einer vorteilhaften Variante eines erfindungsgemäßen Betriebsaktuators kann die Feststellbremse einen axial bewegbaren Betriebsbremskolben aufweisen, der durch Druckbeaufschlagung bewegbar ausgebildet ist und der mit einem Kolbenrohr des Spindeltriebs gekoppelt ist. Das Kolbenrohr ist in Eingriff mit einer in dem Gehäuse drehbar gelagerten Gewindemutter des Spindeltriebs der erfindungsgemäßen Verriegelungsvorrichtung, welche die Verzahnung aufweist. Die erfindungsgemäße Verriegelungsvorrichtung wirkt über die Sperrklinke mit der Verzahnung der Gewindemutter zusammen. Die Sperrklinke ist unter Lösen des Eingriffs mit der Gewindemutter verschwenkbar in Richtung einer am Gehäuse befindlichen Fläche. Die Fläche wird nachfolgend auch als Anschlagsfläche bezeichnet. Allerdings kann das Anschlagsdämpfungselement derart auf das Sperrelement, insbesondere die Sperrklinke, wirken, dass der Anschlag an die besagte Anschlagfläche auch verhindert werden kann.

In einer weiteren vorteilhaften Variante eines erfindungsgemäßen Bremsaktuators kann dieser als Kombibremszylinder ausgebildet sein. Er umfasst einen Betriebsbremszylinder als aktive Betriebsbremse mit wenigstens einem druckmittelbetätigten Betriebsbremskolben, welcher über eine Betriebsbremskolbenstange einen Bremsmechanismus betätigt. Der Kombibremszylinder umfasst zudem einen Federspeicherbremszylinder als Teil einer passiven Feststellbremse, welche durch die Verriegelungsvorrichtung lösbar ist, und welche mit einem gegen die Wirkung wenigstens einer Speicherfeder druckmittelbetätigten Federspeicherbremskolben versehen ist, der im Feststellbremsfall die Kraft der wenigstens einen Speicherfeder auf die Betriebskolbenstange überträgt. Somit entspricht diese Variante des Bremsaktuators im Wesentlichen den in der DE 10 2007 063 699 B4 beschriebenen Ausführungsvarianten mit dem Unterschied, dass die erfindungsgemäße Verriegelungsvorrichtung in diesem Bremsaktuator vorgesehen ist.

Alternativ kann das Anschlags-Dämpfungselement in der Wandung eines Gehäuses des Bremsaktuators fixiert sein. Kommt es zu einer mechanischen Schädigung der Sperrklinke durch die angreifenden Kräfte, so kann das Anschlags-Dämpfungselement trotz Austauschs der Sperrklinke im Gehäuse verbleiben.

Weitere Vorteile, Merkmale und Einzelheiten der Erfindung ergeben sich aus der nachfolgenden Beschreibung, in der mehrere Ausführungsbeispiele der Erfindung anhand der beiliegenden Zeichnungen näher erläutert werden. Der Fachmann wird die in den Zeichnungen, der Beschreibung und den Ansprüchen in Kombination offenbarten Merkmale zweckmäßigerweise auch einzeln betrachten und zu sinnvollen weiteren Kombinationen zusammenfassen. Es zeigen:

Figur 1  schematische Teilansicht auf eine Verriegelungsvorrichtung eines erfindungsgemäßen Bremsaktuators;

Figur 2  Vergrößerung eines Dämpfungselements zur Anschlagsdämpfung einer Sperrklinke der Verriegelungsvorrichtung;

Figur 3 a-c  Detaildarstellung mehrerer weiterer Varianten von Dämpfungselementen zum Einsatz in einem erfindungsgemäßen Bremsaktuator in Abwandlung zu Fig. 2;

Figur 4  Detaildarstellung einer zweiten Variante eines Dämpfungselements einer erfindungsgemäßen Verriegelungsvorrichtung;

Figur 5  Detaildarstellung einer dritten Variante eines Dämpfungselements einer erfindungsgemäßen Verriegelungsvorrichtung;

Figur 6  Ansicht auf eine zweite Variante einer Verriegelungsvorrichtung eines zweiten erfindungsgemäßen Bremsaktuators; und

Figur 7  Ansicht auf eine dritte Variante einer Verriegelungsvorrichtung eines dritten erfindungsgemäßen Bremsaktuators.

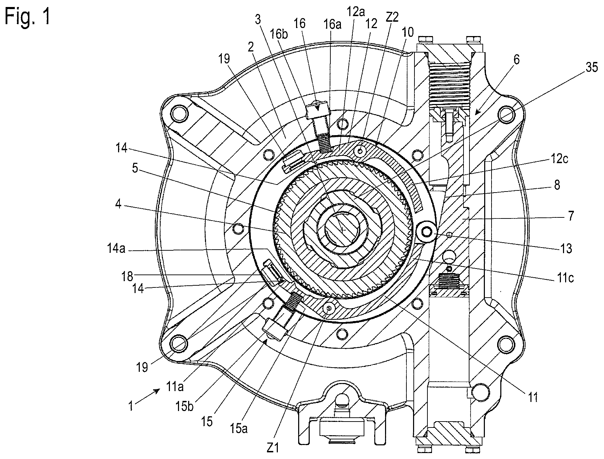

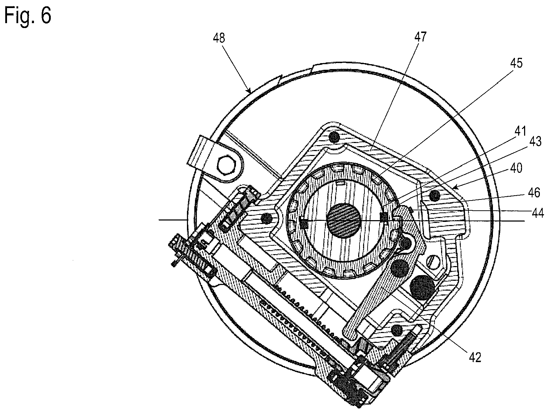

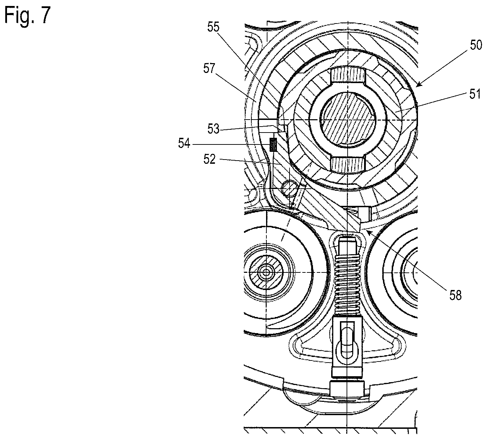

Verschiedenen Varianten von Bremsaktuatoren mit Feststellbremsen, z.B. von Schienenfahrzeugen, sind an sich bekannt. Abgesehen von der Verriegelungsvorrichtung kann der konstruktive Aufbau einer Feststellbremse u.a. der DE 10 2018 122 519 A1 oder der DE 10 2007 063 699 B4 entnommen werden, auf welche im Rahmen der vorliegenden Anmeldung verwiesen wird.
Der Grundaufbau einer ersten Variante eines erfindungsgemäßen Bremsaktuators 1 mit einer Feststellbremse wird anhand von **Figur 1** näher erläutert, in welchem die erfindungsgemäße Verriegelungsvorrichtung eingesetzt werden kann. Die Anwendung der Verriegelungsvorrichtung ist allerdings nicht auf diese Bauform einer Bremse und eines Bremsaktuators beschränkt. Eine zweite und dritte Variante eines Bremsaktuators werden beispielhaft in Fig. 6 und 7 dargestellt. Zahlreiche weitere Abwandlungen von Bremsaktuatoren sind im Rahmen der vorliegenden Erfindung möglich.
Ein Bremsaktuator 1 weist typischerweise eine Feststellbremse auf. Die Feststellbremse ist mit einer Verriegelungsvorrichtung versehen, welche als mechanische Bremskraftverriegelung wirkt und für den Einsatz bei Schienenfahrzeugen vorgesehen ist. Im Gehäuseinnenraum des Gehäuses 1a der Feststellbremse ist typischerweise ein Betriebsbremskolben längs einer Kolbenachse verschiebbar angeordnet. Der Betriebsbremskolben kann das Gehäuse in einen Druckraum und den vorgenannten Gehäuseinnenraum unterteilen. Der Druckraum wird typischerweise mit einem Druckmedium, z.B. Druckluft, beaufschlagt. Der Betriebsbremskolben ist über ein Kolbenrohr mit einer Kolbenstange verbunden. Diese Kolbenstange überträgt bei einem Bremsvorgang eine Bremskraft auf ein Bremsgestänge eines Schienenfahrzeuges. Das vorgenannte Kolbenrohr weist ein Gewinde auf, welches in Eingriff mit einer Gewindemutter 4 steht. Die Gewindemutter 4 ist Teil eines Spindeltriebs 35. Das Gewinde ist nicht selbsthemmend ausgeführt. Die Gewindemutter 4 ist in dem zugehörigen Abschnitt des Gehäuses drehbar um die Kolbenachse 3 gelagert und axial fixiert. Eine axiale Bewegung des Betriebsbremskolbens und des Kolbenrohres in Richtung der Kolbenachse 3 bewirkt aufgrund des nicht selbsthemmenden Gewindeeingriffs mit der Gewindemutter 4 eine Drehung der besagten Gewindemutter 4 um die Kolbenachse 3. Wird die Drehung der Gewindemutter 4 durch eine Arretierung behindert, wird zugleich die Axialbewegung des Betriebsbremskolbens gesperrt. Eine solche Arretierung wird hier durch die Verriegelungsvorrichtung 10 gebildet, welche mit einer äußeren Verzahnung 5der Gewindemutter 4 zusammenwirkt.
Die in **Figur 1** dargestellte Verriegelungsvorrichtung 10 umfasst in der dargestellten Ausführungsvariante die Gewindemutter 4, eine erste Sperrklinke 11, eine zweite Sperrklinke 12 und eine Steuervorrichtung.
Die Sperrklinken 11, 12 bilden hier in Bezug auf die Kolbenachse 3, zu welcher die Gewindemutter 4 koaxial angeordnet ist, radial gegenüberliegend angeordnete Sperrelemente. Es kann in einer anderen Ausführung auch lediglich eine Sperrklinke vorgesehen sein. Die Sperrklinke 11 weist überdies eine Kontaktrolle 13 auf. Die Sperrklinke 12 ist in Figur 1 bereichsweise hinter der Sperrklinke 11 angeordnet. Daher ist in der Figur nur ein Teilbereich der Sperrklinke 12 dargestellt. Sie kann ebenfalls eine Kontaktrolle aufweisen, welche durch die Kontaktrolle 13 verdeckt ist.
Die Sperrklinken 11 und 12 wirken mit der Verzahnung 8 der Gewindemutter 4 zusammen und werden durch die Steuervorrichtung betätigt. Die Steuervorrichtung weist eine Riegelstange 7 mit einer geneigten Kontaktfläche 8 auf, entlang welcher die Kontaktrolle 13 der Sperrklinke 11 und ggf. auch die Kontaktrolle der Sperrklinke 12 abrollen. Die Riegelstange 7 ist linear und senkrecht zur Kolbenachse 3 beweglich und kann manuell, durch Druck, elektromotorisch oder auf beliebige andere Weise bewegt werden.
Durch das Abrollen der Kontaktrolle 13 der Sperrklinke 11 entlang der geneigten Kontaktfläche 16 erfolgt eine Schwenkbewegung der Sperrklinke 11 um eine Schwenkachse, so dass eine Verzahnung der Sperrklinke 11 mit der Verzahnung 8 der Gewindemutter 4 in Eingriff gebracht oder aus einem Eingriff gelöst wird. Die Verzahnung 14 kann, wie im dargestellten Ausführungsbeispiel, lediglich einen Zahn 14a umfassen. Die Sperrklinke muss nicht zwingend einen Zahn aufweisen, sie kann auch lediglich mit einem Hebelbereich, z.B. einer Stirnfläche, in einer Zahnlücke des Spindeltriebs einliegen und dadurch den Spindeltrieb in einer Drehrichtung sperren.

Die Schwenkachsen Z1 und Z2 der Sperrklinken 11 und 12 sind dabei parallel zur Drehachse 3 des Spindeltriebs 35 angeordnet.

Die Sperrklinken 11, 12 sind als Winkelhebel mit jeweils zwei Hebelarmen 11a, 11c, 12a, 12c ausgebildet. Dabei umgreifen die Sperrklinken 11, 12 die radial umlaufende Verzahnung 8 der Gewindemutter 4 um mehr als 180°. Die Verzahnung 8 der Sperrklinke 11 ist Teil des ersten Hebelarms 11a und die Kontaktrolle 13 ist Teil des zweiten Hebelarms 11c. Der Hebelarm 11c mit der Kontaktrolle 13, nachfolgend auch rollenseitiger Hebelarm 11c genannt, ist länger ausgebildet als der Hebelarm 11a mit der Verzahnung 14.

Im Eingriff bilden die Verzahnung 14 mit den zugehörigen Zähnen in der in Fig. 1 dargestellten Variante einen Formschluss wie z.B. bei einem Gesperre. Die Verzahnung 8 und 14 können dabei als Sägezahnprofil ausgebildet sein.

Besonders bevorzugt ist die Verzahnung 8 dabei so ausgebildet, dass jeder Zahn eine radiale Flanke und eine geneigte Flanke in Bezug auf die Kolbenachse 3 aufweist. In dem Arretierungszustand der Verriegelungsvorrichtung 10 stehen die jeweiligen radialen Flanken der Verzahnung 14 mit radialen Flanken Verzahnung 8 in Kontakt.

Weiterhin weist das Gehäuse 1a einen Federhalter 15 und 16 auf. Dabei werden die Sperrklinken 11, 12 mit ihrer jeweiligen Verzahnung 14 jeweils mittels einer Feder 15a, 16a in Eingriff mit der Verzahnung 8 der Gewindemutter 4 gedrückt. Die Federn 15a, 16a sind jeweils Druckfedern und stehen mit einem Federstift 15b, 16b der Federhalter 15, 16 jeweils mit dem Hebelarm 11c und 12c der Sperrklinken 11, 12 in Kontakt. Dabei wirkt die Federkraft der Feder 15a auf den zweiten Hebelarm 11c der ersten Sperrklinke 11 derart ein, dass die erste Sperrklinke 11 um ihre Schwenkachse Z1 im Uhrzeigersinn verschwenkt wird und dadurch der Eingriff mit der Gewindemutter 4 erfolgt. In ähnlicher Weise wirkt die Federkraft der Feder 16a.

Aus Figur 1 geht nunmehr hervor, dass durch lineares Verfahren der Riegelstange 7 ein radiales Verschwenken des Hebelarms 11c von der Kolbenachse 3 weg erfolgt, wobei der Hebelarm 11c endständig an eine Anschlagsfläche 18 des Gehäuses 1a anschlägt.

Durch die im Verlauf des Lösevorgang allmählich nachlassende Reibkraft z.B. durch Übergang von Haftreibung zu Gleitreibung und durch den schlagartigen Abbau der Feststellbremskraft und der Zuspannenergie beim Lösen des Eingriffs wird ein Teil der Zuspannenergie auf die Sperrelemente, hier die Sperrklinken 11 und 12, übertragen. Dies führt zu einer erheblichen Beschleunigung der Sperrelemente, wobei diese anschließend mit hoher Energie auf die Anschlagflächen 18 des Gehäuses 1a aufschlagen. Dadurch werden die Sperrklinken 11 und 12 einerseits als auch die Anschlagflächen 18 andererseits stark beansprucht und es kommt zu einer erheblichen Geräuschentwicklung.

Zur Vermeidung dieser Situation weisen die Hebelarme 11c, 12c der Sperrelemente bzw. der Sperrklinken 11 und 12 eines oder mehrere Anschlags-Dämpfungselemente 19, vorzugsweise aus einem Elastomermaterial oder einem TPE-Material, auf. Besonders bevorzugt kann es sich um Gummimuffen handeln.

Demgegenüber sind die Sperrelemente aus einem metallischen Material, z.B. Stahl.

Die Anschlags-Dämpfungselemente 19 sind endständig an dem Hebelarm 11c angeordnet und mit diesem formschlüssig verbunden.

Das Material der Anschlags-Dämpfungselemente 19 weist ein geringeres E-Modul, vorzugsweise zumindest ein 5-mal geringeres E-Modul, auf als das Material der Sperrelemente. Das Anschlags-Dämpfungselement 19 steht auf der der Gewindemutter 4 abgewandten Seite aus der Oberfläche der Sperrklinke 11 bzw. 12 hervor. Das Hervorstehen kann zumindest 50% der Höhe der Sperrklinke 11, 12 im benachbarten Bereich des Anschlags-Dämpfungselements 19 betragen.

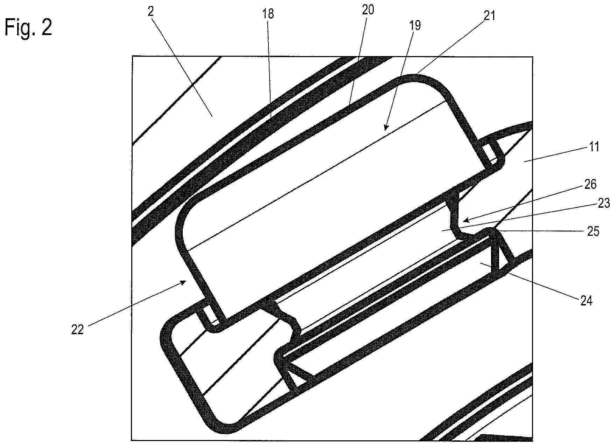

Figur 2 zeigt eine Vergrößerung des Anschlags-Dämpfungselements 19 der Fig. 1. Man erkennt eine flache Anschlagsfläche 20, vorzugsweise mit randseitigen Abrundungen 21. Die Anschlagsfläche 20 ist Teil eines Pilzkopfs 22, welcher in entgegengesetzter Richtung zur Anschlagsfläche 20 in einen Schaft 23 übergeht und welcher in einen auskragenden Fuß 24 mündet. Der Fuß weist zur besseren Einführung in eine Aufnahme 26 der Sperrklinke 11 einen konischen Verlauf auf. Der Fuß 24 korrespondiert mit einem Hinterschnitt 25 der Aufnahme 26 der Sperrklinke 11 und bildet dadurch einen Formschluss mit der Aufnahme 26 der Sperrklinke 11, so dass es zu einer formschlüssigen Sperrung des Anschlags-Dämpfungselements 19 gegen eine Verschiebung in oder entgegen der Einsteckrichtung kommt. Bevorzugt ist das Anschlags-Dämpfungselement 19 symmetrisch, besonders bevorzugt achsensymmetrisch ausgebildet und insbesondere rotationssymmetrisch ausgebildet.

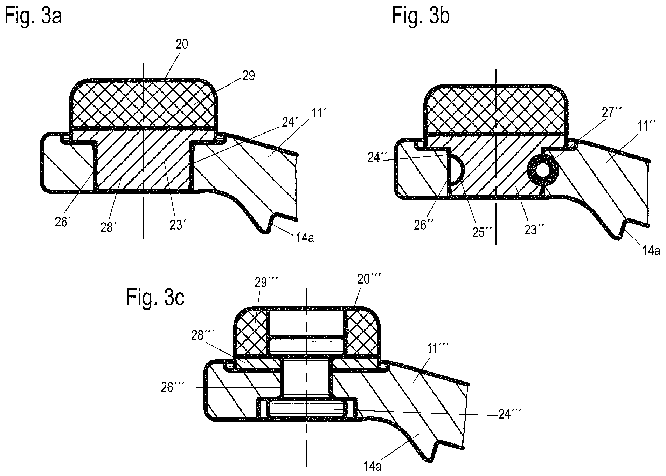

**Figur 3a-c** zeigen mehrere weitere Abwandlungen zur Festlegung eines Anschlags-Dämpfungselements in einer Aufnahme 26', 26", 26''' einer Sperrklinke 11', 11", 11'''. Alle weiteren Elemente der Verriegelungsvorrichtung 10 können gleichbleibend - analog zu Fig. 1 - ausgebildet sein.

Das Anschlags-Dämpfungselement 19' der **Figur 3a** weist ebenfalls einen Pilzkopf 22' mit einer Anschlagsfläche 20' auf. Der an den Pilzkopf 22' angrenzende Schaft 23' weist einen Mantelfläche 24' ohne aus der Mantelfläche hervorstehende Vorsprünge auf. Das Anschlags-Dämpfungselement 19' ist an gleicher Position wie in Fig. 2 durch Presssitz in der Aufnahme 26' der Sperrklinke 11' gehalten.

Das Anschlags-Dämpfungselement 19' weist eine Kombination aus zwei Materialien auf. Der Pilzkopf 22' besteht zumindest im Bereich der Anschlagsfläche 20' aus dem vorgenannten elastischen Material, z.B. einem Elastomer oder einem TPE.

Zumindest der Schaft 23' und vorzugsweise auch ein der Anschlagsfläche 20' abgewandter Teil des Pilzkopfs 22' kann vorzugsweise aus einem Material mit einem größeren E-Modul bestehen als das elastische Material des Pilzkopfs 22' im Bereich der Anschlagsfläche 20'. Das elastische Material des Pilzkopfs bildet ein Anschlagselement 29' aus. Das Material mit dem größeren E-Modul bildet ein Trägerelement 28' aus. Dies ermöglicht eine bessere Verankerung des Anschlags-Dämpfungselements 19' in der Aufnahme 26'. Auch das Anschlags-Dämpfungselement 19' ist vorzugsweise symmetrisch, besonders bevorzugt achsensymmetrisch ausgebildet und insbesondere rotationssymmetrisch ausgebildet.

Das Anschlags-Dämpfungselement 19" der **Figur 3b** ist, abgesehen von der Ausformung des Schafts 23", analog zu Fig. 3a ausgebildet. Der Schaft 23" weist eine Ausnehmung 25" in der Mantelfläche 24" auf. In der Ausnehmung 25" ist zwischen dem Anschlags-Dämpfungselement 19" und der Aufnahme 26" des Sperrklinke 11" ein flexibles Klemmelement 27" oder ein Spannstift angeordnet. Dieses Klemmelement 27" kann sich beim Einstecken des Anschlags-Dämpfungselements 19" in die Aufnahme 26" verformen und sperrt die Linearbewegung des Anschlags-Dämpfungselements 19' in oder entgegen der Einsteckrichtung bis zum Erreichen einer Kraft bis zur Verformungsgrenze des Klemmelements 27". Das Klemmelement 27" kann bereichsweise oder umlaufend um den Schaft 23" ausgebildet sein. Das Klemmelement 27" kann wahlweise der Aufnahme 26" oder aber dem Anschlags-Dämpfungselement 19" zugeordnet sein.

Bei dem Anschlags-Dämpfungselement 19‴ der Figur 3c ist der Schaft 23‴ als ein gegenüber dem Pilzkopf 22‴ gesondertes Bauteil ausgeführt. Dabei kann es sich um eine Schraube-Mutter-Kombination mit einer pilzkopfseitig einführbaren Schraube mit einer Flachmutter als korrespondierendes Fixierungselement handeln, welche eine Sperrung gegen eine Linearbewegung in oder entgegen der Einsteckrichtung ermöglicht. Die Anschlagsfläche 20‴ ist durch eine Bauteil-Aufnahme 24‴ unterbrochen. Analog zu den vorhergehenden Ausführungsvarianten ist der Pilzkopf aus einem Anschlagselement 29‴ aus dem elastischen Material und dem in diesem Fall ringscheibenförmigen Trägerelement 28‴ mit dem höheren E-Modul als das elastische Material ausgebildet. Anstelle der Schraube und der Flachmutter sind auch andere mechanische Verbindungsmittel 24‴, z.B. eine Sprenghülse mit zwei endständigen Ringscheiben, denkbar. Daher ist das gesonderte Bauteil nicht zwingend eine Schrauben-Mutter-Kombination. Es kann einen beliebigen Schaftabschnitt und zwei endständig am Schaftabschnitt angeordnete Axialanschlagselemente aufweisen. Dies kann auch und bevorzugt über eine Nietverbindung realisiert sein.

Die Bauteil-Aufnahme 24‴ im Pilzkopf 22‴ kann als Ausweichraum für die elastische Verformung des elastischen Materials dienen. Dadurch wird eine noch größere Umformung des Pilzkopfs bei gleicher Beschleunigung bis zum Anschlag ermöglicht.

In Figur 3a-c kann das Anschlagselement 29', 29‴ z.B. als Elastomerwerkstoff auf das Trägerelement 28', 28‴ als ein Metallteil aufvulkanisiert sein. Dabei kann das Trägerelement 28, 28‴ auf verschiedene Arten wie z.B. über einen Presssitz, einen Formschluss oder auch eine Nietverbindung mit der Sperrklinke 11, 11', 11", 11‴ verbunden sein.

Durch die in Fig. 1-3 dargestellten Anschlags-Dämpfungselemente 19, 19', 19", 19‴ kann die kinetische Energie der Sperrklinken 11, 11', 11", 11‴ in Wärme bzw. Reibungsenergie umgewandelt werden.

Die vorbeschriebenen Anschlags-Dämpfungselemente sind elastisch gestaltet, um einen zusätzlichen Verformungsweg bereitzustellen. Da die Energie das Integral aus Weg und Kraft ist, bewirkt der zusätzliche Verformungsweg bei gleicher Energie eine Reduzierung der Kraft auf die Kontaktflächen sowie eine Reduzierung der Geräuschentwicklung.

Darüber hinaus wird durch eine elastische Formgebung der Sperrelemente ein "Nachfedern" erreicht. Bei drehbar gelagerten Sperrelementen, wie z.B. den dargestellten Sperrklinken, bedeutet dies, dass das Massenträgheitsmoment durch den zusätzlichen Verformungsweg nicht abrupt, sondern zeitlich verzögert auf die Anschlagflächen des Gehäuses 1a wirksam wird. Dies führt wiederum zu einer Reduzierung der Kontaktkraft im Anschlagpunkt und damit zu einer Reduzierung der Geräuschentwicklung.

In **Figur 1** ist zudem ersichtlich, dass der rollenseitige Hebelarm (-schenkel) 11c filigran und damit biegeweich, zumindest biegeweicher als der andere Hebelarm 11a mit der Verzahnung 14, ausgestaltet ist. Dies bewirkt, wie oben beschrieben, dass der Schenkel, sobald die Sperrklinke 11, 11', 11", 11‴ beim Lösen auf einen Anschlag triff, einen zusätzlichen Drehwinkel und damit einen zusätzlichen Verformungsweg ausführen kann. Dadurch wird die Anschlagkraft auf die Anschlags-Dämpfungselemente 19, 19', 19", 19‴ zusätzlich reduziert. Die Sperrklinken 11, 11', 11", 11‴ und deren Hebelarme 11a oder 11b gelten in diesem Zusammenhang als biegeweich, wenn deren Nachgiebigkeit im Bereich zwischen $1 \times 10^{-5}$ und $1 \times 10^{-2}$ 1/N unter Standard-Messbedingungen liegt.

Die Nachgiebigkeit der Klinken ist definiert durch den Quotienten aus der Durchbiegung und des Biegemomentes. Betrachtet man den Klinkenschenkel als Kragbalken, berechnet sich die Nachgiebigkeit δ wie folgt:

$$\delta - \frac{l^3}{3 \times E \times I}$$

In den gezeigten Ausführungsvarianten ist die Nachgiebigkeit direkt in der Sperrklinke, als einstückiges Bauteil, ausgeführt. Es ist aber auch denkbar, dass die Nachgiebigkeit durch ein mehrstückiges Sperrelement realisiert wird, indem die Sperrklinke z.B. zweiteilig ausgestaltet ist und mit einem zusätzliches Federelement wie einer Blattfeder oder einer Schraubenfeder versehen ist.

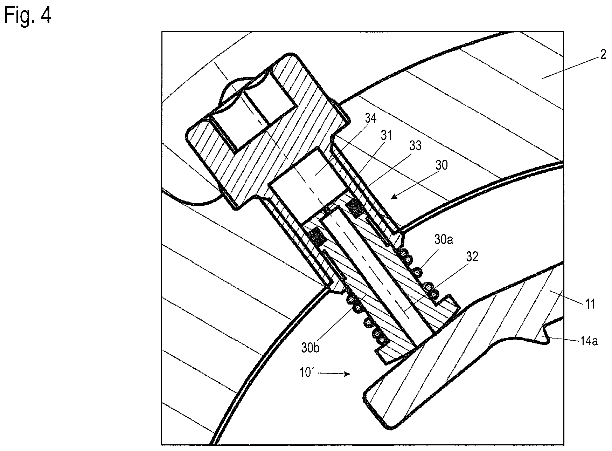

Eine weitere Variante einer erfindungsgemäßen Verriegelungsvorrichtung 10' ist in **Figur 4** dargestellt. Dabei werden die jeweiligen Federhalter 15 und 16 der Figur 1 als Fluiddämpfer 30 ausgeführt. Somit ist das Anschlags-Dämpfungselement und der Federhalter 15, 16 in einem Bauteil realisiert. Der Fluiddämpfer kann als ein pneumatischer Dämpfer oder hydraulischer Dämpfer ausgebildet sein. Er weist ebenfalls eine Feder 30a und einen Federstift 30b auf.

Im Fall des in **Figur 4** dargestellten pneumatischen Dämpfers kann die komprimierte Luft über eine Düse bzw. Blende 31 entweichen. Die Düse 31 ermöglicht einen Übertritt der Luft in eine zentrale Bohrung 32 in den Federstift 30b. Der Federhalter 15 und 16 ist jeweils über eine Gehäusehülse 33, z.B. eine Schraubhülse, in der Wandung des Gehäuse 1a angeordnet. Innerhalb der Gehäusehülse 33 ist der Federstift 30b linear beweglich geführt. Jenseits des Federstifts 30b ist eine Druckkammer 34 angeordnet, aus welcher unter Ausbildung eines entsprechenden Kompressionsdrucks über die Düse 31 und die Bohrung 32 ein flüssiges oder gasförmiges Druckfluid entweichen kann.

Randseitig weist der Federstift 30b eine Dichtung auf, welche den Federstift 30b bei seiner Bewegung gegen die Gehäusehülse 33 abdichtet.

Durch die vorbeschriebene Ausbildung des Federhalters 15, 16 wird die kinetische Energie in Wärme umgewandelt und/oder durch eine verzögerte Ableitung des Dämpfungsfluids über die Bohrung durch die Viskosität des Fluids gedämpft. Dadurch wird wiederum die Kraft auf die Anschläge reduziert. Wie zuvor erwähnt, sind Ausführungen mit Flüssigkeiten als Dämpfungsfluid, wie z.B. Öl oder Ähnliches, vorstellbar und bevorzugt.

In einer weiteren erfindungsgemäßen Variante der Erfindung kann die Verriegelungsvorrichtung 10" mit einer alternativen Variante eines Dämpfungselements, welches einen Federhalter und ein elastisch-verformbares Anschlags-Dämpfungselement miteinander vereint.

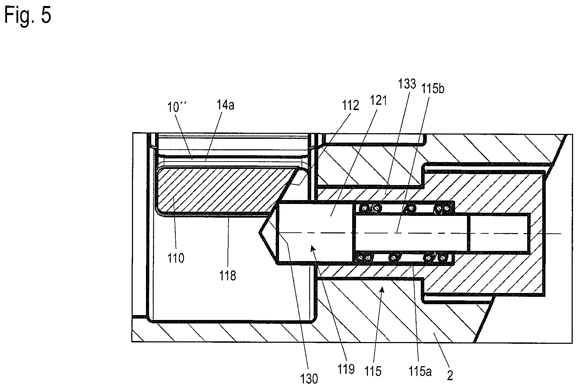

In **Figur 5** ist die Ansicht auf die Verriegelungsvorrichtung 10" im Vergleich zu Figur 1 um 90° gedreht, so dass man in Richtung der Längserstreckung auf die Sperrklinke 110 schaut.

Die Sperrklinke 110 weist randseitig ihrer Anschlagsfläche 118 eine Schrägfläche 112 auf, entlang welcher ein federgelagerter spitz-zulaufender Bolzenkopf 121 gleitend geführt ist.

Der Bolzenkopf 121 ist Teil eines als Anschlags-Dämpfungselement 119 ausgebildeten Federhalters 115. Der Bolzenkopf 121 ist endständiger Teil eines Federstifts 115b, welcher über eine Feder 115a federgelagert ist. Das Anschlags-Dämpfungselement weist überdies eine Gehäusehülse 133 auf, welche in der Wandung des Gehäuses 1a angeordnet ist.

Eine Endfläche des Bolzenkopfes 121 ist als Reibfläche 130 ausgebildet, welche reibend entlang der Schrägfläche 112 geführt ist. Im unbelasteten Zustand der Sperrklinke 110 wird der Federstift 115b gegen die Schrägfläche 112 gepresst, so dass sich die Sperrklinke 110 in Eingriff mit der Gewindemutter 4 4 gebracht wird.

Bei Betätigung der Sperrklinke 110 durch die Steuervorrichtung 13 und durch die Schwenkbewegung der Sperrklinke 110 wird der Federstift 115b unter Kompression der Feder 115a tiefer in die Gehäusehülse 133 gepresst.

Die Reibung der Reibfläche 130 entlang der Schrägfläche 112 bzw. Keilfläche erhöht den Dämpfungseffekt zusätzlich.

Die in **Figur 5** dargestellte Lösung stellt somit ein oder mehrere an der Sperrklinke eingreifende Reibelemente dar.

Dadurch wird die kinetische Energie des Sperrelementes teilweise in Reibenergie und somit in Wärme umgewandelt. Durch die Schrägfläche 112 steigt die Reibkraft an, wodurch zusätzliche Energie abgebaut wird. Auch bei dieser Ausführung wird wiederum die Kraft auf die Anschlagflächen und damit die Geräuschentwicklung reduziert.

Die Varianten der Figuren können vielfältig abgewandelt werden, ohne dass die Grundidee der vorliegenden Erfindung verändert wird. Beispielsweise kann der Bolzenkopf 121 der Figur 5 keine mittige Spitze, sondern eine randseitige Spitze aufweisen, so dass sich die Reibfläche 130 vergrößert.

Darüber hinaus können auch mehrere der vorgenannten Anschlags-Dämpfungselemente in einer Verriegelungsvorrichtung vorgesehen sein.

Die erfindungsgemäße Verriegelungsvorrichtung kann in mehreren verschiedenen Bautypen von Bremsaktuatoren mit Feststellbremsen, z.B. auch in Federspeicher-Feststellbremsen, eingesetzt werden.

**Figur 6** zeigt eine weitere Variante einer erfindungsgemäßen Verriegelungsvorrichtung 40 mit einem Spindeltrieb 41 mit einer Verzahnung 45, insbesondere einer umlaufenden Außenverzahnung bzw. einer radialen Verzahnung. Die Verzahnung 45 steht analog zu der Variante in Fig. 1 in Eingriff mit einem zur Verriegelungsvorrichtung 40 zugeordneten Sperrelement in Form einer Sperrklinke 42, welche um einen Drehpunkt herum verschwenkbar angeordnet ist. Die Sperrklinke 42 weist auf der der Verzahnung 45 zugewandten Seite einen Zahn 43 auf und auf der gegenüberliegenden Seite der Sperrklinke 42 ein elastisches Dämpfungselement 44 auf. Dieses dämpft den Anschlag der Sperrklinke gegen die Anschlagsfläche 46 des Gehäuses 47 des Bremsaktuators 48.

**Figur 7** zeigt eine weitere Variante einer Verriegelungsvorrichtung 50 mit einem Spindeltrieb 51 mit einer Verzahnung 55. In diesem Fall ist die Verzahnung 55 lediglich eine einzelne Zahnkerbe. Dies stellt ebenfalls eine Verzahnung im Sinne der vorliegenden Erfindung dar.

Die Verzahnung 55 weist überdies einen Eingriff mit einer Kante 53 der Sperrklinke 52, welche um einen Drehpunkt herum verschwenkbar angeordnet ist. Der Eingriff erfolgt in diesem Fall durch eine Verrastung der Verzahnung und der Kante, sondern lediglich durch einen Anschlag der Flanke der Zahnlücke gegen die Kante 53 der Sperrklinke 52.

Die Sperrklinke 52 weist ebenfalls ein elastisches Dämpfungselement 54 auf. Dieses dämpft den Anschlag der Sperrklinke gegen das Gehäuse 57 des Bremsaktuators 58.

In den Varianten der Fig. 1-7 ist die Verzahnung 5, 45 und 55 des Spindeltriebs jeweils bevorzugt als eine asymmetrische Verzahnung ausgebildet.

**Bezugszeichenliste**

1 Bremsaktuator
1a Gehäuse
2 Gehäuse
3 Drehachse
4 Gewindemutter
5 Verzahnung
6 Steuervorrichtung
7 Riegelstange
8 Geneigte Kontaktfläche
10, 10', 10" Verriegelungsvorrichtung
11, 11', 11", 11''' Sperrklinke
11a Hebelarm
11c Hebelarm
12, 12', 12", 12''' Sperrklinke
12a Hebelarm
12c Hebelarm
13 Kontaktrolle
14 Verzahnung
14a Zahn
15 Federhalter
15a Feder
15b Federstift
16 Federhalter
16a Feder
16b Federstift
18 Anschlagsflächen
19, 19', 19", 19''' Anschlags-Dämpfungselement
20, 20', 20''' Anschlagsfläche
21 Abrundung
22, 22', 22''' Pilzkopf
23, 23', 23" Schaft

24 Fuß
25 Hinterschnitt
26, 26', 26", 26''' Aufnahme
24', 24" Mantelfläche
25" Ausnehmung
27" Klemmelement
28', 28''' Trägerelement
29', 29''' Anschlagselement
24''' mechanisches Verbindungsmittel
30 Fluiddämpfer / Anschlags-Dämpfungselement
30a Feder
30b Federstift
31 Düse
32 Bohrung
33 Gehäusehülse
34 Druckkammer
35 Spindeltrieb
40 Verriegelungsvorrichtung
41 Spindeltrieb
42 Sperrklinge
43 Zahn
44 Dämpfungselement
45 Verzahnung
46 Anschlagsfläche
47 Gehäuse
48 Bremsaktuator
50 Verriegelungsvorrichtung
51 Spindeltrieb
52 Sperrklinge
53 Kante
54 Dämpfungselement
55 Verzahnungselement
57 Gehäuse
58 Bremsaktuator
110 Sperrklinke
112 Schrägfläche
115 Federhalter
115a Feder
115b Federstift
118 Anschlagsfläche
119 Anschlags-Dämpfungselement
121 Bolzenkopf
130 Reibfläche
133 Gehäusehülse
Z1, Z2 Schwenkachse

**Patentansprüche**

**1.** Verriegelungsvorrichtung (10, 10', 10", 40, 50) zum manuellen Lösen einer Feststellbremse, insbesondere in einem Bremsaktuator (1) für Schienenfahrzeuge, wobei die Verriegelungsvorrichtung (10, 10', 10", 40, 50) einen Spindeltrieb (35, 41, 51) mit einer Verzahnung (5, 45, 55) und zumindest ein die Drehbewegung und damit die Axialkraftübertragung einer Feststellbremse schaltendes Sperrelement umfasst, welches in Eingriff mit der Verzahnung (5, 45, 55) steht, **dadurch gekennzeichnet, dass** die Verriegelungsvorrichtung (10, 10', 10", 40, 50) zumindest ein Anschlags-Dämpfungselement (19, 19', 19", 19‴, 30, 119, 44, 54) aufweist, welches den Anschlag des Sperrelements dämpft oder diesen verhindert.

2. Verriegelungsvorrichtung nach Anspruch 1, **dadurch gekennzeichnet, dass** das zumindest eine Sperrelement oder jedes der Sperrelemente als verschwenkbare Sperrklinke (11, 11', 11", 11‴, 110, 42, 52) ausgebildet ist.

3. Verriegelungsvorrichtung nach Anspruch 1 oder 2, **dadurch gekennzeichnet, dass** das Anschlags-Dämpfungselement (19, 19', 19", 19‴, 44, 54) als elastisches Dämpfungselement ausgebildet ist.

4. Verriegelungsvorrichtung nach Anspruch 1 oder 2, **dadurch gekennzeichnet, dass** das Anschlags-Dämpfungselement (30) als Fluiddämpfer mit einem gasförmigen und/oder flüssigen Dämpfungsmedium ausgebildet ist.

5. Verriegelungsvorrichtung nach Anspruch 1, **dadurch gekennzeichnet, dass** das Anschlags-Dämpfungselement (119) eine Reibfläche (130) an der Kontaktstelle zur Sperrklinke (110) aufweist.

6. Verriegelungsvorrichtung nach einem der vorhergehenden Ansprüche, **dadurch gekennzeichnet, dass** die Verriegelungsvorrichtung (10, 10', 10"), vorzugsweise das Anschlags-Dämpfungselement (30, 119), einen federgelagerten Federstift (30b, 115b) umfasst, welcher unter Einwirkung einer Rückstellkraft einer Feder (30a, 115a) die Sperrklinke (11, 110) in Eingriff mit der Verzahnung (5) des Spindeltriebs (35) drückt.

7. Verriegelungsvorrichtung nach einem der vorhergehenden Ansprüche, **dadurch gekennzeichnet, dass** die Sperrklinke (11, 11', 11", 11‴, 110) durch eine einer Steuervorrichtung (6) zugeordneten linear-verschiebbaren Riegelstange (7) betätigbar ist.

8. Verriegelungsvorrichtung nach Anspruch 6, **dadurch gekennzeichnet, dass** die Sperrklinke (11, 11', 11", 11‴, 110, 44, 54) eine Kontaktrolle (13) aufweist, welche derart zur Riegelstange (7) angeordnet ist, dass sie zur Betätigung der Sperrklinge (11, 11', 11", 11‴, 110, 42, 52) entlang einer geneigten Kontaktfläche (8) der Riegelstange (7) rollbar ist.

9. Verriegelungsvorrichtung nach einem der vorhergehenden Ansprüche, **dadurch gekennzeichnet, dass** das Anschlags-Dämpfungselement (19, 19', 19", 19‴, 44, 54) in einer Aufnahme (26, 26', 26", 26‴) der Sperrklinke (11, 11', 11", 11‴, 42, 52) fixiert ist.

10. Verriegelungsvorrichtung nach einem der vorhergehenden Ansprüche, **dadurch gekennzeichnet, dass** das Anschlags-Dämpfungselement ((19, 19', 19", 19‴, 30, 119) einen Pilzkopf (22, 22') mit einer Anschlagfläche (20, 20‴) und einen Schaft (23, 23', 23") zur Festlegung in der Aufnahme (26, 26', 26", 26‴) aufweist.

11. Verriegelungsvorrichtung nach einem der vorhergehenden Ansprüche, **dadurch gekennzeichnet, dass** das Anschlags-Dämpfungselement (19, 19', 19", 19‴, 30, 119, 44, 54) zumindest bereichsweise, insbesondere im Bereich des Pilzkopfes (22, 22', 22‴) aus einem Elastomer und/oder einem TPE gebildet ist.

12. Verriegelungsvorrichtung nach einem der vorhergehenden Ansprüche, **dadurch gekennzeichnet, dass** das Anschlags-Dämpfungselement (19, 19', 19", 19‴, 30, 119) zumindest bereichsweise, insbesondere im Bereich des Schafts (23, 23', 23", 23‴) aus einem Material besteht, welches ein größeres E-Modul aufweist, als ein Material im Bereich des Pilzkopfes (22, 22', 22‴).

13. Verriegelungsvorrichtung nach einem der vorhergehenden Ansprüche, **dadurch gekennzeichnet, dass** die Verriegelungsvorrichtung (10', 10") ein Bauteil aufweist, welches sowohl den Federstift (115', 30b) umfasst und welcher zudem als das Anschlags-Dämpfungselement (19, 19', 19", 19‴, 30, 119) ausgebildet ist.

14. Verriegelungsvorrichtung nach einem der vorhergehenden Ansprüche, **dadurch gekennzeichnet, dass** benachbart zum Federstift (30b) ein Druckraum (34) angeordnet ist, in welchem das Dämpfungsfluid angeordnet ist.

15. Verriegelungsvorrichtung nach einem der vorhergehenden Ansprüche, **dadurch gekennzeichnet, dass** der Federstift (115b) endständig einen Bolzenkopf (121), insbesondere einen pilzkopfförmigen Bolzenkopf (121), mit einem spitz-zulaufenden Ende mit der Reibfläche (130) aufweist.

16. Verriegelungsvorrichtung nach einem der vorhergehenden Ansprüche, **dadurch gekennzeichnet, dass** die Sperrklinke (11, 11', 11", 11‴, 110) einen ersten Hebelarm (11c) aufweist, auf welchen die Steuervorrichtung (6) einwirkt, und einen zweiten Hebelarm (11a) aufweist, welcher mit einer Verzahnung (14), umfassend zumindest einen Zahn (14a), zum Eingriff mit einer korrespondierenden Verzahnung (5) des Spindeltriebs versehen ist, wobei der erste Hebelarm (11c) biegeweich mit Nachgiebigkeit im Bereich zwischen $1 \times 10^{-5}$ und $1 \times 10^{-2}$ ausgebildet ist.

**17.** Bremsaktuator (1, 48, 58), insbesondere für ein Schienenfahrzeug, umfassend eine Feststellbremse und eine Verriegelungsvorrichtung (10, 10', 10", 40, 50) zum Lösen dieser Feststellbremse nach einem der vorhergehenden Ansprüche.

**18.** Bremsaktuator nach Anspruch 17, **dadurch gekennzeichnet, dass** die Feststellbremse einen axial bewegbaren Betriebsbremskolben aufweist, der durch Druckbeaufschlagung bewegbar ausgebildet und mit einem Kolbenrohr des Spindeltriebs (35) gekoppelt ist, wobei das Kolbenrohr in Eingriff mit einer in dem Gehäuse (2) drehbar gelagerten Gewindemutter (4) des Spindeltriebs steht, welche die Verzahnung (5) aufweist und wobei die Verriegelungsvorrichtung (10, 10', 10") über die Sperrklinke (11, 11', 11", 110) mit der Verzahnung (5) der Gewindemutter (4) zusammenwirkt, wobei die Sperrklinke (11, 11', 11", 11‴, 110) unter Lösen des Eingriffs mit der Gewindemutter (4) in Richtung einer am Gehäuse (2) des Bremsaktuators befindlichen Fläche (18) des Gehäuses (2) verschwenkbar ist.

**19.** Bremsaktuator nach Anspruch 17, **dadurch gekennzeichnet, dass** der Bremsaktuator (48, 58) als Kombibremszylinder mit einem Gehäuse (47, 57) ausgebildet ist, umfassend einen Betriebsbremszylinder als aktive Betriebsbremse mit wenigstens einem druckmittelbetätigten Betriebsbremskolben, welcher über eine Betriebsbremskolbenstange einen Bremsmechanismus betätigt, sowie einen Federspeicherbremszylinder als passive Feststellbremse, welche durch die Verriegelungsvorrichtung lösbar ist, und welche mit einem gegen die Wirkung wenigstens einer Speicherfeder druckmittelbetätigten Federspeicherbremskolben versehen ist, der im Feststellbremsfall die Kraft der wenigstens einen Speicherfeder auf die Betriebskolbenstange überträgt.

**20.** Verriegelungsvorrichtung nach einem der vorhergehenden Ansprüche, **dadurch gekennzeichnet, dass** das Anschlags-Dämpfungselement (30, 119) in der Wandung eines Gehäuses (1a, 2) des Bremsaktuators (1) fixiert ist.

Fig. 1

Fig. 2

Fig. 3b

Fig. 3a

Fig. 3c

Fig. 4

EP 4 675 122 A1

Fig. 5

EP 4 675 122 A1

Fig. 6

Fig. 7

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2004 058332 A1 (ZAHNRADFABRIK FRIEDRICHSHAFEN [DE]) 8. Juni 2006 (2006-06-08) | 1-6, 13-15, 17-20 | INV. F16D63/00 |
| Y | * Absätze [0014] - [0049]; Abbildungen 1-7 * | 7,8,16 | |
| | ----- | | |
| X | DE 198 34 075 A1 (ZAHNRADFABRIK FRIEDRICHSHAFEN [DE]) 3. Februar 2000 (2000-02-03) * Abbildung 3 * | 1-3,17, 20 | |
| | ----- | | |
| X | DE 10 2016 210757 B3 (SIEMENS AG [DE]) 1. Juni 2017 (2017-06-01) * Absatz [0029]; Abbildungen 1,2 * | 1-5,17, 20 | |
| | ----- | | |
| X | DE 102 45 951 A1 (ZAHNRADFABRIK FRIEDRICHSHAFEN [DE]) 29. April 2004 (2004-04-29) * Absätze [0023], [0024]; Abbildung 3 * | 1-3,9-12 | |
| | ----- | | |
| Y | DE 10 2019 113930 A1 (KNORR BREMSE SYSTEME [DE]) 26. November 2020 (2020-11-26) * Abbildung 2 * ----- | 7,8,16 | RECHERCHIERTE SACHGEBIETE (IPC) F16D |

Der vorliegende Recherchenbericht wurde für alle Patentansprüche erstellt

| Recherchenort | Abschlußdatum der Recherche | Prüfer |
|---|---|---|
| München | 22. Oktober 2025 | Hernandez-Gallegos |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 17 6063

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-2025

| Im Recherchenbericht angeführtes Patentdokument | Datum der Veröffentlichung | Mitglied(er) der Patentfamilie | Datum der Veröffentlichung |
|---|---|---|---|
| DE 102004058332 A1 | 08-06-2006 | AT      E397173 T1 | 15-06-2008 |
|  |  | DE 102004058332 A1 | 08-06-2006 |
|  |  | EP      1817516 A1 | 15-08-2007 |
|  |  | WO    2006058571 A1 | 08-06-2006 |
| DE 19834075   A1 | 03-02-2000 | KEINE |  |
| DE 102016210757 B3 | 01-06-2017 | CN    109476283 A | 15-03-2019 |
|  |  | DE 102016210757 B3 | 01-06-2017 |
|  |  | EP      3472006 A1 | 24-04-2019 |
|  |  | US    2020309262 A1 | 01-10-2020 |
|  |  | WO    2017216230 A1 | 21-12-2017 |
| DE 10245951   A1 | 29-04-2004 | KEINE |  |
| DE 102019113930 A1 | 26-11-2020 | CN    111981064 A | 24-11-2020 |
|  |  | DE 102019113930 A1 | 26-11-2020 |
|  |  | EP      3744592 A1 | 02-12-2020 |
|  |  | ES      2925276 T3 | 14-10-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018122519 A1
- DE 102007063699 B4
- EP 2826684 B1